Europäisches Patentamt

European Patent Office

Office européen des brevets

(19)

(11) EP 0 760 391 A1

(12) EUROPEAN PATENT APPLICATION

(43) Date of publication:
05.03.1997 Bulletin 1997/10

(51) Int. Cl.$^6$: C09K 7/02

(21) Application number: 95202386.9

(22) Date of filing: 04.09.1995

(84) Designated Contracting States:
GB

(71) Applicant: SHELL INTERNATIONALE RESEARCH
MAATSCHAPPIJ B.V.
2596 HR Den Haag (NL)

(72) Inventors:
• Muijs, Herman Mathieu
NL-1383 CD Weesp (NL)
• Wiersma, Rendert Jan
NL-1031 CM Amsterdam (NL)

(54) **Water-based drilling fluid**

(57) A water-based drilling fluid comprising water, between 1 and 20 %m of a polymer, between 1 and 10 %m of a cuttings protection additive in the form of a first alcohol alkoxylate having a cloud point below the bottomhole circulation temperature and between 1 and 10 %m of a wellbore protection additive in the form of a second alcohol alkoxylate having a cloud point which is between the bottomhole circulation temperature and the formation temperature, and optionally a salt.

EP 0 760 391 A1

## Description

The present invention relates to a drilling fluid which is used in rotary drilling of a wellbore in an underground formation. In rotary drilling many requirements are placed on the drilling fluid. Some of the requirements are: to carry drilling cuttings from beneath the bit, to transport them through the annulus between the wellbore and the drill string and to permit their separation at surface; to cool and clean the bit; to reduce friction between the drill string and the wellbore; and to maintain uncased sections of the wellbore.

The present invention relates in particular to a water-based drilling fluid, such a drilling fluid is an aqueous system with all kinds of additives. A disadvantage of water as the basis of a drilling fluid is that such a drilling fluid is not particularly suited to be used in drilling through a shale-containing underground formation. This can be explained as follows. Water can diffuse into shale and in this way water is believed to contribute to swelling of the shale. An effect of the swelling of shale is that shale-containing drilling cuttings will disintegrate to form a very large number of small particles and this will cause the viscosity of the drilling fluid to increase and it makes separating the drilling cuttings from the drilling fluid more difficult. A further effect of swelling of shale is that the integrity of uncased sections of a wellbore drilled through a shale-containing formation is adversely affected.

Several attempts have been made to provide additives that prevent drilling cuttings disintegration in water-based drilling fluids. An example is given in European patent application publication No. 495 579. This publication discloses a water-based drilling fluid including an alcohol alkoxylate and a potassium salt in an amount of between 14.3 and 143 g/l. The drilling fluid may furthermore contain a polymer in the form of xanthan gum, sodium carboxymethylcellulose or an anionic polyacrylamide.

This publication is primarily concerned with preventing drilling cuttings from disintegrating. Table 5 of this publication describes a water-based drilling fluid containing sea water, 25 ppb (pounds per barrel) of KCl, 1 ppb of xanthan gum, 4 ppb of sodium carboxymethylcellulose, 1 ppb of anionic polyacrylamide, and 3% by volume of an alcohol alkoxylate, wherein the alcohol alkoxylate is either a polyethylene glycol having an average molecular mass of 280 or a polyethylene/polypropylene glycol having an average of 4.3 alkylene oxide groups. From this example can be concluded that very similar results can be obtained with the two alcohol alkoxylates.

The additives described in this publication are examples of so-called non-ionic surfactants. A property of a non-ionic surfactant is that it has a cloud point: at a temperature below the cloud point the non-ionic surfactant is dispersed in the aqueous phase and at a temperature above the cloud point the non-ionic surfactant appears as a separate phase.

Although the above-mentioned publication discloses that drilling cuttings disintegration is prevented by any one of the alcohol alkoxylates, Applicant has found that a polyethylene/polypropylene glycol is not particularly well suited to protect the integrity of the wellbore. More in particular, Applicant had found that the combination of a polymer and an alcohol alkoxylate that has a cloud point below the bottomhole circulation temperature is less suited to protect the integrity of the wellbore. This can be understood as follows. At temperatures which prevail in the wellbore, the alcohol alkoxylate that has a cloud point below the bottomhole circulation temperature forms a separate phase which interacts with the polymer to form a complex which is adsorbed on shale. As is now understood the complex comprises the polymer and micelles of the additive, which complex forms a coating on the shale. This coating can keep a particle together, however, the coating may not be able to prevent water from entering into the particle. Therefore, although the particle is kept together by the coating, it may still swell. The coating is sufficient to protect drilling cuttings, however, the coating is generally not sufficient to protect the integrity of the wellbore. Moreover, as the alcohol alkoxylate is present as a separate phase it is not able to enter into the pores of the shale so as to plug the pores.

It is an object of the present invention to provide a water-based drilling fluid which contains both a cuttings protection additive to prevent disintegration of shale-containing drilling cuttings and a wellbore protection additive which protects the integrity of the wellbore or, in other words, stabilizes the wellbore.

To this end the water-based drilling fluid according to the present invention comprises water, between 1 and 20 %m of a polymer, between 1 and 10 %m of a cuttings protection additive in the form of a first alcohol alkoxylate having a cloud point below the bottomhole circulation temperature and between 1 and 10 %m of a wellbore protection additive in the form of a second alcohol alkoxylate having a cloud point which is between the bottomhole circulation temperature and the formation temperature, and optionally a salt.

In the specification and in the claims '%m' is used to refer to per cent by mass based on the drilling fluid, unless otherwise specified.

Applicant has found that two protection additives with different cloud points are required because of the different functions of the protection additives. A typical bottomhole circulation temperature is 65 °C and a typical formation temperature is 90 °C. The cloud point of the cuttings protection additive is suitably be more than 15 to 20 °C below the bottomhole circulation temperature to ensure separation of the cuttings protection additive in the drilling fluid, and the cloud point of the wellbore protection additive should be between the bottomhole circulation temperature and the formation temperature to ensure separation of the wellbore protection additive on the wall of the borehole.

Suitably the cuttings protection additive is a random or a block copolymer of an alcohol and ethylene oxide and propylene oxide. The alcohol is suitably a $C_1$ through $C_5$ alcohol, the mass ratio of ethylene oxide to propylene oxide is between 40:60 and 60:40, and the molecular mass of the cuttings protection additive is between 500 and 2 000.

Suitably the wellbore protection additive is an alcohol ethoxylate. The alcohol is suitably a $C_1$ through $C_{10}$ alcohol, and the molecular mass of the wellbore protection additive is between 100 and 1 500.

The polymer is suitably a biopolymer, polyanionic cellulose or a partly hydrolysed polyacrylamide.

The salt concentration is suitably between 1 and saturation, which is about 26 %m, and suitably the salt concentration is between 1 and 10 %m. The salt is suitably selected from the group including alkali metal halides and alkali metal formates. One function of the salt is to prevent shale disintegration, and a further function of the salt is to adjust the cloud point of the alcohol ethoxylates.

Initially it was believed that the cuttings protection additive would interact with the wellbore protective additive in such a way that the two would form a separate phase at one temperature. However, this is not the case as is shown in the following experiment. In this experiment an aqueous solution containing 50 mg/ml of the cuttings protecting additive CPA and 50 mg/ml of the wellbore protecting additive WPA in fresh water was heated and the concentration of the concentrations of the additives CPA and WPA in the aqueous phase were determined. Chemical compositions of the protection agents are given in Tables 1 and 2 and their cloud points in fresh water are given in Table 6. The concentration of the cuttings protecting additive CPA decreased significantly at temperatures between 60 and 80 °C, whereas the concentration of the wellbore protection additive WPA remained substantially the same until 80 °C.

To determine the effects of the two protection additives two tests were used, a hot rolling test and a pore pressure penetration test. In Tables 3 through 5 the results of these tests are summarized. In the Tables PHPA is partly hydrolysed polyacrylamide and PAC is polyanionic cellulose.

The hot rolling test is carried out as follows: (1) size the drilling cuttings of Pierre Shale to a size of between 6 and 10 mesh and store the cuttings in a vessel which is partly filled with distilled water for at least 24 hours; (2) determine the dry weight content of the sized drilling cuttings; (3) fill a vessel of stainless steel having a volume of 260 ml with the drilling fluid; (4) add 3 g of the sized drilling cuttings to the vessel; (5) close the vessel and roll it in an oven at a temperature of 65°C for 24 hours; (6) after rolling, allow the vessel to cool, open it and pour the content on three screens arranged on top of each other (a 80 mesh screen, a 30 mesh screen and a 10 mesh screen), rinse the vessel with a potassium chloride solution until all particles are removed, rinse the screens three times with a potassium chloride solution and three times with ethanol, dry the sieves and weigh the sieves before and after removal of the cuttings. Thereafter for each of the three sieves the retention is calculated according to the following equation:

$$\text{retention} = (M_i/M_t)/(Cd_w/100)*100 \text{ \%m,}$$

wherein $M_i$ is the mass in grams of the cuttings on sieve i (i=1-3), $M_t$ is the mass in grams of the sample of drilling cuttings used, and $C_{dw}$ is the dry weight content in %m of the drilling cuttings.

The total mass fraction of retained cuttings is obtained by adding the retention for the sieves together. The figure so obtained is used in Tables 3 through 5 summarizing the results of the hot rolling test (HRT in %m).

The second test is the pore pressure penetration test which Applicant uses to study the increase of the pressure of fluids in the pores of a shale sample. The increase in pressure is believed to be a factor contributing to the destabilization of a shale section of the wellbore, because it reduces the effective stresses around the wellbore making the shale section susceptible to failure in a compressive mode. Therefore the results of the pore pressure penetration test for a particular drilling fluid provide an indication of the ability of that drilling fluid to stabilize shale sections in the wellbore.

The pore pressure penetration test is carried out as follows: (1) a sample of Pierre Shale having a diameter of 2.5 cm and a length of 5 cm is fitted in a Viton (trade mark) sleeve; (2) the sample is fitted in a core holder in such a way that there is a chamber on either side of the sample, which chambers face the end surfaces of the sample; (3) a confining pressure of 20 bar is applied on cylindrical wall of the sample and a pressure of 1.5 bar is applied in the upstream chamber and the downstream chamber for two days to consolidate the sample; and (4) thereafter drilling fluid is introduced in the upstream chamber at a temperature of 65 °C and is heated to 90 °C and the pressure is increased to 15 bar, and the pressure of the fluid in the downstream chamber is monitored with time. For each drilling fluid the pressure build-up in the downstream chamber is compared to the pressure build-up obtained when using diesel oil and when using water. No significant pressure build-up is obtained when using diesel oil and a very substantial pressure build-up is obtained when using water, these extremes are qualitatively indicated with ++ and --respectively. In Tables 3 through 5, the symbols '+' and '-' denote results in between the extremes for diesel oil and water, respectively.

The test fluids used in the two tests consisted of water, 0.05 %m of polymer (if present), 2.5 %m of a cuttings protection agent (if present), 2.5 %m of a wellbore protection agent (if present) and 10 %m of NaCl. Chemical compositions of the protection additives used in the tests are given in the below Tables 1 and 2.

Table 1

| Chemical compositions of the cutting protection additives. | |
|---|---|
| CPA | block copolymer of butanol with equal amounts of ethylene oxide and propylene oxide having a molecular mass of 600 |
| CPB | block copolymer of butanol with equal amounts of ethylene oxide and propylene oxide having a molecular mass of 1 800 |

Table 2

| Chemical compositions of the wellbore protection additives. | |
|---|---|
| WPA | butanol ethoxylate having a molecular mass of 220 |
| WPB | trimethylolpropane with 14.4 ethylene oxid groups |
| WPC | $C_{10}$ ethoxylate with 25 ethylene oxide group |

Table 3

| Results of the hot rolling test (HRT) and the pore pressure penetration test (PPPT) for a water-based drilling fluid not containing a protection additive. | | | |
|---|---|---|---|
| Additive | Polymer | HRT in %m | PPPT |
| none | none | 38 | - |
| none | PHPA | 66 | - |
| none | PAC | 59 | - |

Table 4

| Results of the hot rolling test (HRT) and the pore pressure penetration test (PPPT) for a water-based drilling fluid containing a cuttings protection additive. | | | |
|---|---|---|---|
| Additive | Polymer | HRT in %m | PPPT |
| CPA | none | 67 | - |
| CPA | PHPA | 93 | - |
| CPA | PAC | 90 | - |
| CPB | none | 78 | - |
| CPB | PHPA | 95 | - |
| CPB | PAC | 95 | - |

Table 5

| Results of the hot rolling test (HRT) and the pore pressure penetration test (PPPT) for a water-based drilling fluid containing a wellbore protection additive. | | | |
|---|---|---|---|
| Additive | Polymer | HRT in %m | PPPT |
| WPA | none | 38 | + |
| WPA | PHPA | 60 | + |
| WPA | PAC | 57 | + |
| WPB | none | 40 | + |
| WPB | PHPA | 85 | + |
| WPB | PAC | 57 | + |
| WPC | none | 45 | + |
| WPC | PHPA | 64 | + |
| WPC | PAC | 53 | + |

From the above test results it can be clearly seen that the combination of polymer and cuttings protection additive gives better results in the hot rolling test than in the pore pressure penetration test, whilst the wellbore protection additive gives poorer results in the hot rolling test than in the pore pressure penetration test. Therefore a combination of the two additives will protect both the cuttings as well as the wellbore.

Furthermore the salt is present in the drilling fluid to adjust the cloud point of the alcohol ethoxylates. The effect of salt on the cloud point is shown in Table 6.

Table 6

| The effect of sodium chloride on the cloud points (Cp in °C) of alcohol ethoxylate additives. | | |
|---|---|---|
| Additive | Cp in fresh water | Cp in 10 %m NaCl |
| CPA | 55 | 26 |
| CPB | 23 | 13 |
| WPA | >100 | 70 |
| WPC | >100 | 80 |

The water-based drilling fluid suitably further contains other materials which are well known in the art, for example material to increase the density, drilling fluid conditioning agents or lost circulation materials.

**Claims**

1. A water-based drilling fluid comprising water, between 1 and 20 %m of a polymer, between 1 and 10 %m of a cuttings protection additive in the form of a first alcohol alkoxylate having a cloud point below the bottomhole circulation temperature and between 1 and 10 %m of a wellbore protection additive in the form of a second alcohol alkoxylate having a cloud point which is between the bottomhole circulation temperature and the formation temperature, and optionally a salt.

2. Water-based drilling fluid according to claim 1, wherein the cuttings protection additive is a random or a block copolymer of an alcohol and ethylene oxide and propylene oxide.

3. Water-based drilling fluid according to claim 2, wherein the alcohol is a $C_1$ through $C_5$ alcohol, wherein the mass ratio of ethylene oxide to propylene oxide is between 40:60 and 60:40, and wherein the molecular mass of the cuttings protection additive is between 500 and 2 000.

4. Water-based drilling fluid according to any one of the claims 1-3, wherein the wellbore protection additive is an alcohol ethoxylate.

5. Water-based drilling fluid according to claim 4, wherein the alcohol is a $C_1$ through $C_{10}$ alcohol, and wherein the molecular mass of the wellbore protection additive is between 100 and 1 500.

6. Water-based drilling fluid according to any one of the claims 1-5, wherein the polymer is a biopolymer, polyanionic cellulose or a partly hydrolysed polyacrylamide.

7. Water-based drilling fluid according to any one of the claims 1-6, wherein the salt concentration is between 1 and 26 %m.

8. Water-based drilling fluid according to any one of the claims 1-7, wherein the salt is selected from the group including alkali metal halides and alkali metal formates.

| European Patent Office | EUROPEAN SEARCH REPORT | Application Number EP 95 20 2386 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | US-A-3 236 769 (R.F.BURDYN) <br> * column 2, line 3 - column 3, line 61 * <br> * column 4, line 4 - line 6 * <br> * column 6, line 42 - line 66 * <br> * column 10, line 15 - line 62 * <br> * column 11, line 5 - line 21 * <br> --- | 1-8 | C09K7/02 |
| Y | US-A-5 337 824 (K.M.COWAN) <br> * column 4, line 5 - line 65 * <br> * column 13, line 38 - column 14, line 55 * <br> * column 15, line 25 - line 53 * <br> --- | 1-8 | |
| Y | US-A-5 361 841 (A.H.HALE) <br> * column 4, line 3 - line 44 * <br> * column 7, line 3 - line 16 * <br> * column 10, line 10 - line 37 * <br> * column 15, line 13 - line 44 * <br> * column 16, line 3 - line 11 * <br> * column 18, line 18 - line 28 * <br> --- | 1-8 | |
| Y | US-A-5 358 044 (A.H.HALE) <br> * column 3, line 65 - column 4, line 57 * <br> * column 10, line 9 - line 32 * <br> * column 14, line 50 - column 15, line 53 * <br> * column 16, line 5 - line 33 * <br> * column 19, line 3 - line 12 * <br> --- | 1-8 | TECHNICAL FIELDS SEARCHED (Int.Cl.6) <br><br> C09K |
| Y | US-A-5 120 708 (S.MELEAR) <br> * column 4, line 9 - column 6, line 34 * <br> * column 8, line 26 - line 66 * <br> --- | 1-8 | |
| Y | EP-A-0 058 917 (PHILIPS PETROLEUM) <br> * page 2, line 22 - page 3, line 27 * <br> * page 4, line 3 - line 18 * <br> * page 7, line 1 - line 7 * <br> ----- | 1-8 | |

The present search report has been drawn up for all claims

| Place of search | Date of completion of the search | Examiner |
|---|---|---|
| THE HAGUE | 14 February 1996 | Boulon, A |